(19) Europäisches Patentamt
European Patent Office
Office européen des brevets

(11) EP 1 697 687 B1

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(21) Anmeldenummer: **04804548.8**

(22) Anmeldetag: **22.11.2004**

(51) Int Cl.:
***F23N 5/00*** *(2006.01)* ***F02C 9/28*** *(2006.01)*
***F02C 7/22*** *(2006.01)*

(86) Internationale Anmeldenummer:
**PCT/EP2004/053039**

(87) Internationale Veröffentlichungsnummer:
**WO 2005/052450 (09.06.2005 Gazette 2005/23)**

(54) **VERFAHREN ZUR ERMITTLUNG SCHWANKENDER BRENNSTOFFEIGENSCHAFTEN WÄHREND DES BETRIEBS EINER KRAFTWERKSANLAGE**

METHOD FOR DETERMINING FLUCTUATING FUEL PROPERTIES DURING THE OPERATION OF A POWER PLANT

PROCEDE PERMETTANT DE DETERMINER LES PROPRIETES VARIABLES D'UN COMBUSTIBLE PENDANT LE FONCTIONNEMENT D'UNE CENTRALE ELECTRIQUE

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **27.11.2003 EP 03027392**

(43) Veröffentlichungstag der Anmeldung:
**06.09.2006 Patentblatt 2006/36**

(73) Patentinhaber: **SIEMENS AKTIENGESELLSCHAFT**
**80333 München (DE)**

(72) Erfinder: **DEUKER, Eberhard**
**45481 Mülheim (DE)**

(56) Entgegenhaltungen:
**EP-A- 1 118 857**
**US-A- 4 659 306**
**US-A- 5 486 107**

- **PATENT ABSTRACTS OF JAPAN Bd. 006, Nr. 153 (M-149), 13. August 1982 (1982-08-13) -& JP 57 070321 A (HITACHI LTD), 30. April 1982 (1982-04-30)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 697 687 B1

## Beschreibung

Die Erfindung betrifft ein Verfahren zur Ermittlung schwankender Brennstoffeigenschaften während des Betriebs einer Kraftwerksanlage.

Bei modernen Kraftwerksanlagen, wie beispielsweise Hochtemperaturgasturbinen, die mit Erdgas betrieben werden, ist die Umsetzung des Brennstoffs in der Regel auf eine bestimmte Brennstoffzusammensetzung abgestimmt. Hinsichtlich der Zusammensetzung des Brennstoffs werden Kenngrößen, wie die Wobbezahl, der Heizwert und/oder die Normdichte, verwendet, welche innerhalb eines eng spezifizierten Bereichs liegen müssen, um einen sicheren Betrieb der Kraftwerksanlage zu gewährleisten. Die Versorgung von Kraftwerksanlagen ist jedoch oftmals so gestaltet, dass sich die Zusammensetzung des Brennstoffs unter Umständen spontan (innerhalb weniger Minuten oder sogar im Sekundenbereich) deutlich ändern kann. Die für den Brennstoff spezifizierten Grenzen werden dann überschritten und die Kraftwerksanlage kann unter Umständen nicht mehr stabil betrieben werden.

Aus der europäischen Patentanmeldung EP 1 118 857 A2 ist ein Verfahren zum Bestimmen einer Veränderung eines Wärmeinhalts von in einem Verbrennungsturbinensystem verwendetem Brennstoff bekannt. Das Verfahren beinhaltet das Messen von Daten des Verbrennungsturbinensystems während der Verbrennung des Kraftstoffs, während das Verbrennungsturbinensystem sich online befindet und im Betrieb ist. Die Bestimmung einer Veränderung des Brennstoffwärmeinhalts beinhaltet eine Berechnung der Wärmerate. Die Wärmerate ist äquivalent zu einer Bestimmung des Wirkungsgrades des Betriebs des gesamten Verbrennungsturbinensystems.

In der japanischen Patentanmeldung JP-P-570 70 321 A ist ferner ein Verfahren offenbart, mit dem ein Heizwert von in Verbrennung befindlicher Kohle online und in Echtzeit aus dem thermischen Ausgangswirkungsgrad eines Kohleverfeuerungsboilers bestimmt werden kann.

Aus der US-Patentschrift US 5,486,107 ist ein Verfahren zum Bestimmen thermophysikalischer oder thermochemischer Parameter eines Brenngases bekannt. Dabei wird eine Beziehung vorgestellt, welche die Bestimmung vieler auf einer grundlegenden Beziehung mit der charakteristischen spezifischen Wärmekapazität und thermischen Leitfähigkeit beruhender Parameter an einem Referenzzustand des Brenngases erlaubt.

Aus der US-Patentschrift US 4,459,306 ist ein Verfahren zur Bestimmung des Mischungsverhältnisses eines ein Sauerstoffträgergas und einen Brennstoff enthaltenden Gemisches bekannt. Das Gemisch, das in einer Hauptverbrennungseinrichtung verbrannt wird, wobei die thermodynamischen Randbedingungen der Gasmengen vor und nach dem Mischen veränderlich sein können, wird eine Nebenverbrennungseinrichtung, in der eine Teilmenge des Brennstoffs mit einer Teilmenge des Sauerstoffträgergases zur Reaktion gebracht wird, als Referenzbrennkammer betrieben. Für die Reaktion in der Referenzbrennkammer wird ein Gemisch verwendet, das zu dem in der Hauptverbrennungseinrichtung zur Verbrennung kommenden Gemisch reproduzierbar analog ist. Aus einer meßtechnischen Erfassung des Verbrennungszustandes in der Referenzbrennkammer wird wenigstens ein Signal für eine Messung und/oder Regelung des Mischungsverhältnisses der Hauptverbrennungseinrichtung abgeleitet.

Außerhalb des für den Brennstoff spezifizierten Bereichs kann in der Kraftwerksanlage insbesondere die Verbrennung instabil werden, was beispielsweise zu Teillastabwürfen oder sogar zum Schnellschluss über die Schutzeinrichtungen einer Gasturbine führen kann.

Der Erfindung liegt die Aufgabe zugrunde, ein Verfahren bereitzustellen, mittels dem schwankende Brennstoffeigenschaften auch während des Betriebs einer Kraftwerksanlage ohne nennenswerten Zusatzaufwand ermittelt werden können. Die Ermittlung sollte möglichst zeitnah erfolgen, so dass entsprechend Gegenmaßnahmen, wie z.B. ein Nachregeln einer Pilotgasmenge, ergriffen werden können.

Die Aufgabe ist mit einem Verfahren zur Ermittlung schwankender Brennstoffeigenschaften während des Betriebs einer Kraftwerksanlage gelöst, bei dem anhand von aktuellen Betriebsparametern der Kraftwerksanlage ein Wirkungsgrad für die Kraftwerksanlage ermittelt wird und aufgrund einer zeitlichen Veränderung des derart ermittelten Wirkungsgrades auf eine Änderung der Brennstoffeigenschaften geschlossen wird. Erfindungsgemäß wird die zeitliche Veränderung des Wirkungsgrades bezogen auf einen Referenzbetriebszustand ermittelt, zu dem als Referenzgrößen der Heizwert und/oder die Normdichte des Brennstoffs ermittelt werden, wobei die Ermittlung der Referenzgrößen durch eine gleitende Mittelwertbildung während des Betriebs der Kraftwerksanlage erfolgt.

Die Erfindung basiert auf dem Grundgedanken, dass der Wirkungsgrad moderner Kraftwerksanlagen im Wesentlichen unabhängig von einer Änderung der Zusammensetzung des darin verarbeiteten Brennstoffs ist. Ferner werden bei modernen Kraftwerksanlagen im Wesentlichen die Größen, die zur Berechnung des Wirkungsgrades notwendig sind, alle bereits betrieblich erfasst. Indem ein (fiktiver bzw. Referenz-) Wirkungsgrad der Kraftwerksanlage nun beispielsweise kontinuierlich aus den betrieblichen Messwerten errechnet wird, kann eine zeitliche Veränderung dieses errechneten Wirkungsgrades ermittelt werden. Ändert sich der errechnete Wirkungsgrad mit der Zeit, so müssen sich die Brennstoffeigenschaften geändert haben, und man kann angeben, wie groß deren Änderung ist.

Das erfindungsgemäße Verfahren ermöglicht es also, dass man z.B. anhand von betrieblichen Messgrößen, die zum normalen Messumfang jeder Gasturbine gehören, Änderungen in der Zusammensetzung des darin verarbeiteten Brenngases erkennen kann. Daher kann erfindungsgemäß eine Gasturbine in einem größeren Bereich bzw. einer größeren Bandbreite von Brennstoffen betrieben werden. Ferner ist der Betrieb der Gasturbine bzw. einer Kraftwerksanlage auch bei einer plötzlichen Änderung der Zusammensetzung des zugehörigen Brennstoffs sichergestellt. Das Erkennen der Änderung der Brennstoff- bzw. Gaseigenschaften eröffnet nämlich die Möglichkeit, mit einer Änderung verbrennungstechnischer Setup-Parameter (z.B. Brennstoffmenge für Pilotbrenner, Brennkammertemperatur etc.) die Auswirkung der Brennstoffänderung zu kompensieren und so den stabilen Gasturbinenbetrieb sicherzustellen.

Bei einer vorteilhaften Weiterbildung des erfindungsgemäßen Verfahrens wird als aktueller Betriebsparameter mindestens ein Element aus der Gruppe Leistung der Kraftwerksanlage, Massenstrom des Brennstoffs, Volumenstrom des Brennstoffs, Druck des Brennstoffs und Temperatur des Brennstoffs ermittelt.

Diese aktuellen Betriebsparameter können mit vergleichsweise geringem Aufwand während des Betriebs einer Kraftwerksanlage bestimmt werden und führen, wie nachfolgend genauer dargestellt werden wird, bei entsprechender Auswertung zu einer präzisen Ermittlung von Änderungen der Brennstoffeigenschaften.

Für die erfindungsgemäße Ermittlung des Wirkungsgrades der Kraftwerksanlage wird vorteilhaft direkt der Massenstorm des in der Kraftwerksanlage verarbeiteten Brennstoffs erfasst.

Alternativ kann zur Ermittlung des Wirkungsgrades der Volumenstrom des Brennstoffs, dessen Druck und dessen Temperatur, insbesondere unter Vernachlässigung des Realgasfaktors bei gasförmigem Brennstoff erfasst werden. Die Erfassung des Volumenstroms geschieht dabei vorteilhaft mit einem Turbinradzähler, Ultraschallzähler oder einem Wirbelzähler. Die erfindungsgemäße Ermittlung des Wirkungsgrades der Kraftwerksanlage kann ferner vorteilhaft durch Messung von Differenzdruck, sowie Druck und Temperatur des Brennstoffs, wiederum insbesondere unter Vernachlässigung des Realgasfaktors bei gasförmigem Brennstoff, erfolgen. Differenzdruck und Druck des gasförmigen Brennstoffs können beispielsweise an einer Blende ermittelt werden.

Mit dem erfindungsgemäßen Verfahren können Veränderungen verschiedenster Brennstoffeigenschaften ermittelt werden. Vorteilhaft kann eine Änderung des massenbezogenen Heizwerts des Brennstoffs ermittelt werden, welcher eine wichtige Aussage über die Zusammensetzung des Brennstoffs darstellt, so dass während des Betriebs der Kraftwerksanlage entsprechende Korrekturen in der Brennstoffversorgung erfolgen können.

Ferner kann mit dem erfindungsgemäßen Verfahren vorteilhaft auf eine Änderung des volumenbezogenen Heizwerts des Brennstoffs rückgeschlossen werden.

Darüber hinaus können erfindungsgemäß auch Änderungen des Wobbeindexes eines gasförmigen Brennstoffs ermittelt werden, in dem Aussagen über die Normdichte und den volumenbezogenen Heizwert eines gasförmigen Brennstoffs zusammengefasst sind.

Bei dem erfindungsgemäßen Verfahren wird demnach die zeitliche Veränderung des Wirkungsgrades bezogen auf einen Referenzbetriebszustand ermittelt, zu dem als Referenzgrößen der Heizwert und/oder die Normdichte des Brennstoffs ermittelt werden. Diese Referenzgrößen werden dann bei der nachfolgenden betriebsbegleitenden Ermittlung eines Wirkungsgrades konstant gesetzt und es wird geprüft, ob dieser "fiktive" Wirkungsgrad sich ändert. Da Änderungen der Brennstoffeigenschaften in Wirklichkeit nahezu keinen Einfluss auf den Wirkungsgrad einer Kraftwerksanlage haben, wird an einer Veränderung des "fiktiven" Wirkungsgrades erkannt, dass sich der Heizwert und/oder die Normdichte des Brennstoffs gegenüber dem Referenzbetriebszustand geändert haben müssen. Ferner kann aus einer errechneten Abweichung zwischen dem Wirkungsgrad zum Referenzbetriebszustand und dem "fiktiven" Wirkungsgrad abgeleitet werden, wie groß die Änderung von Heizwert und Normdichte ist. Die genannten Referenzgrößen können durch eine gleitende Mittelwertbildung während des Betriebs der Kraftwerksanlage ermittelt werden. Diese betriebsbegleitende Ermittlung kann beispielsweise mit einem

Online-Gaschromatographen erfolgen, mit dem zu einem bestimmten Zeitpunkt die Referenzgrößen gemessen werden. Ferner kann mit einem solchen Gaschromatographen während eines stationären Betriebszustands einer Gasturbine eine Vielzahl von Messwerten über beispielsweise einen Zeitraum von ca. 2 Stunden erfasst werden und dann daraus durch Mittelwertbildung auf Referenzgrößen rückgeschlossen werden. Die erfindungsgemäße Änderung der Brennstoffeigenschaften wird vorteilhaft mittels mathematischer Methoden quantifiziert, deren Ergebniswerte dann zum Steuern und Regeln von Korrektureingriffen an der zugehörigen Kraftwerksanlage genutzt werden können. Mit derartigen mathematischen Methoden können ferner aktuelle Betriebsparameter ausgewertet werden, die in insbesondere regelmässigen Zyklen mit einer Zykluszeit von zirka 0,1 sek bis 60 sek, insbesondere von zirka 1 sek ermittelt werden. Dabei können über mehrere Zyklen, beispielsweise über zirka 5 oder 11 Messzyklen hinweg Mittelwerte der Betriebsparameter gebildet werden. Damit die Ergebnisse des erfindungsgemäßen Verfahrens zur Ermittlung schwankender

Brennstoffeigenschaften nicht von unerwünschten Störeinflüssen beeinflusst werden, sollten bei der Ermittlung des Wirkungsgrades insbesondere anhand aktueller Betriebsparameter der Kraftwerksanlage Dämpfungs- und/oder Filterfunktionen berücksichtigt werden.

Nachfolgend wird ein Ausführungsbeispiel eines erfindungsgemäßen Verfahrens zur Ermittlung schwankender Brennstoffeigenschaften während des Betriebs einer Kraftanlage anhand zweier beigefügter beispielhafter schematischer Darstellungen genauer erläutert. Es zeigt:

Fig. 1 ein erstes Diagramm eines Brennstoffgassignals über der Zeit gemäß einem erfindungsgemäßen Verfahren und

Fig. 2 ein zweites Diagramm eines Brennstoffgassignals über der Zeit gemäß dem erfindungsgemäßen Verfahren.

Das erfindungsgemäße Verfahren wird nachfolgend am Beispiel einer Kraftwerksanlage erläutert, die in Form einer Hochtemperaturgasturbine ausgebildet ist.

Das erfindungsgemäße Verfahren nutzt den Umstand, dass bei solchen Hochtemperaturgasturbinen der Gasturbinenwirkungsgrad nahezu unabhängig von einer Änderung der Gaszusammensetzung ist. Ferner nutzt das Verfahren die Tatsache, dass bei derartigen Hochtemperaturgasturbinen bereits nahezu alle Betriebsparameter erfasst werden, die zur Berechnung des Wirkungsgrades der Gasturbine notwendig sind. Während des Betriebs solcher Hochtemperaturgasturbinen wird aber üblicherweise der Heizwert und die Normdichte des als Brennstoff zugeführten Gases nicht ständig kontrolliert. Eine solche Kontrolle würde einen Mehraufwand darstellen, der wirtschaftlich nicht zu rechtfertigen wäre.

Gemäß dem nachfolgend erläuterten Ausführungsbeispiel des erfindungsgemäßen Verfahrens werden im Gegensatz zu kostenaufwendigen Messungen von Heizwert und Normdichte Änderungen der Gaseigenschaften, anhand einer Änderung eines errechneten, sozusagen fiktiven Wirkungsgrades ermittelt.

Dieser "fiktive" Wirkungsgrad wird kontinuierlich aus den betrieblichen Messwerten gebildet, wobei für den Heizwert und die Normdichte zeitlich konstante Referenzwerte eingesetzt werden.

Ändert sich nun der errechnete "fiktive" Wirkungsgrad mit der Zeit, so müssen sich die Gaseigenschaften, wie Heizwert und Normdichte, geändert haben, denn nur durch eine entsprechende Anpassung dieser Werte innerhalb der Rechnung des "fiktiven" Wirkungsgrades gelangt man wieder zu dem eigentlichen Wirkungsgrad der Gasturbine, der, wie erwähnt, nahezu unabhängig von Änderungen der Gaszusammensetzung ist und sich demnach nicht ändert.

Durch die Gegenüberstellung des "fiktiven" Wirkungsgrades und des unveränderten, realen Wirkungsgrades kann auch die Größe der Änderungen der Brennstoffeigenschaften, also die Größe der Änderung von Heizwert und Normdichte angegeben werden.

Die mathematischen Methoden, die bei der Änderung der Brennstoffeigenschaften genutzt werden, werden nachfolgend erläutert.

Bei der erfindungsgemäßen Vorgehensweise werden zunächst die nachfolgenden grundlegenden Beziehungen genutzt:

$$\eta = \frac{P}{m \cdot Hu_m} \qquad Hu_V = \rho_N \cdot Hu_m \qquad m = \delta \cdot V \qquad \rho = \rho_N \frac{p}{p_N} \frac{T_N}{T} \frac{z_N}{z} \qquad (1)-(4)$$

| | |
|---|---|
| η | Wirkungsgrad der Gasturbine |
| P | Leistung |
| Hu | (unterer) Heizwert des Brennstoffs |
| | Index V: bezogen auf Normvolumen |
| | Index m: bezogen auf Masse |
| m | Brennstoffmassenstrom |
| V | Brennstoffvolumenstrom |
| ρ | Dichte des Brennstoffs |
| p | Druck des Brennstoffs |
| T | Temperatur des Brennstoffs |
| z | Realgasfaktor des Brennstoffs |
| Index N: | Normzustand |

Der Wirkungsgrad einer Gasturbine, an der das erfindungsgemäße Verfahren ausgeführt wird, ist, wie erwähnt, im Wesentlichen unabhängig von den Brennstoffeigenschaften des zugeführten Brenngases. Der Wirkungsgrad ist jedoch sehr wohl von verschiedenen, leicht messbaren Größen abhängig, welche im Wesentlichen die Leistung der Gasturbine und die Umgebungstemperatur sind. Ferner ist der funktionale Zusammenhang zwischen dem Wirkungsgrad und diesen, leicht messbaren Größen bekannt.

Erfindungsgemäß wird nun ein Bezugszustand "0" eingeführt, an dem sich gemäß der oben genannten Gleichung (1) ein Wirkungsgrad von

$$\eta_0 = \frac{P_0}{m_0 \cdot Hu_{m.0}} \qquad (5)$$

bei einer Art Referenzbetriebszustand ergibt.

Setzt man diesen Referenzbetriebszustand in Bezug zu einem aktuellen Betriebszustand so ergibt sich die nachfolgende Gleichung:

$$\frac{m \cdot Hu_m}{m_0 \cdot Hu_{m.0}} = \frac{P}{P_0}\frac{\eta_0}{\eta} \qquad (6)$$

Innerhalb dieser Gleichung kann nun während des Betriebs der Gasturbine kontinuierlich der Brennstoffmassenstrom m ermittelt bzw. gemessen werden und es kann ferner auch die von der Gasturbine abgegebene Leistung leicht ermittelt werden.

Der Brennstoffmassenstrom m kann insbesondere nach drei verschiedenen Prinzipien gemessen werden:

Gemäß einem ersten Prinzip kann der Massenstrom beispielsweise mittels eines Corioliszählers direkt erfasst werden.

Bei einem zweiten Prinzip wird mit Hilfe eines Turbinenradzählers, eines Ultraschallzählers oder eines Wirbelzählers der Massenstrom indirekt durch Erfassung von Betriebsvolumenstrom, Druck und Temperatur des zugeführten Brennstoffs ermittelt. Der Massenstrom errechnet sich dann gemäß der Formel:

$$m = V \cdot \rho = V \cdot \rho_N \frac{p}{p_N}\frac{T_N}{T} \qquad (7)$$

Bei dieser Vorgehensweise wird der Einfluss des Realgasfaktors ($z_N/z$) vernachlässigt, es wird also angenommen, dass dieser Realgasfaktor sich nur unwesentlich ändert.

Gemäß einem dritten Prinzip werden beispielsweise an einer Blende der Differenzdruck, der Druck und die Temperatur des Brennstoffs gemessen. Die gemessenen Werte werden dann in der nachfolgenden Formel berücksichtigt:

$$m = K \cdot \sqrt{\Delta p \cdot \rho} = K \cdot \sqrt{\Delta p \cdot \rho_N \frac{p}{p_N}\frac{T_N}{T}} \qquad (8)$$

Auch bei dieser Vorgehensweise wird wiederum der Einfluss des Realgasfaktors vernachlässigt ($z_N/z = 1$).

Indem eine Änderung des derart ermittelten Brennstoffmassenstroms in die oben genannte Gleichung (6) eingesetzt wird, ergeben sich folgende Möglichkeiten, Änderungen der Gaseigenschaften zu ermitteln. Bei den nachfolgenden Gleichungen (9) bis (11) stehen auf der rechten Seite jeweils die zu messenden Größen sowie die (bekannte) Funktion $\eta/\eta_0$ und auf der linken Seite die daraus abgeleitete Gaseigenschaft.

Eine Änderung des massenbezogenen Heizwertes ergibt sich aus:

$$\frac{Hu_m}{Hu_{m,0}} = \frac{P}{P_0}\frac{\eta_0}{\eta}\frac{m_0}{m} \qquad (9)$$

Eine Änderung des volumenbezogenen Heizwertes ergibt sich aus:

$$\frac{Hu_V}{HU_{V,0}} = \frac{P}{P_0}\frac{\eta_0}{\eta}\frac{V_0}{V}\frac{\rho}{\rho_N}\frac{T_N}{T} \qquad (10)$$

Ferner ergibt sich eine Änderung des Wobbeindex aus:

$$\sqrt{\frac{\rho_{n.0}}{\rho_N}}\frac{Hu_V}{Hu_{V,0}} = \frac{P}{P_0}\frac{\eta_0}{\eta}\sqrt{\frac{\Delta p_0}{\Delta p}\frac{p}{p_N}\frac{T_N}{T}} \qquad (11)$$

Daten über den Heizwert bzw. die Normdichte des zugeführten Brenngases für den oben genannten Bezugszustand "o" bzw Referenzbetriebszustand werden durch eine gleitende Mittelwertbildung über einen Zeitraum von zirka 2 Stunden während eines stationären Betriebszustands der Gasturbine ermittelt. Dabei werden z.B. anhand von Werten aus einem Online-Gaschromatographen aktualisierte Brennstoffeigenschaften erfasst und gemittelt.

Ferner können die in den oben aufgeführten Gleichungen verwendeten betrieblichen Messgrößen geeigneten Dämpfungs- bzw. Filterfunktionen unterzogen werden, damit naturgemäße Schwankungen dieser betrieblichen Messgrößen nicht zu einer unerwünschten Verfälschung bei der Ermittlung der Brennstoffeigenschaften führen.

Die betrieblichen Messgrößen werden vorteilhaft mit einer Zykluszeit von ca. 1 sek oder noch kürzer erfasst, wodurch man Änderungen der Brennstoffeigenschaften praktisch in Echtzeit detektieren kann.

Auswertungen des erfindungsgemäßen Verfahrens zur Ermittlung schwankender Brennstoffeigenschaften haben gezeigt, dass mit diesem Verfahren bereits Heizwert- bzw. Dichteänderungen von 1% deutlich erkannt werden können. Die beiliegenden Diagramme zeigen Ergebnisse solcher Untersuchungen, bei denen insbesondere mit einem Turbinenradzähler der Volumenstrom des Brennstoffs kontinuierlich ermittelt worden ist. Bei den Messungen ist mit einem Messzyklus von ca. 5 sek und einer gleitenden

Mittelwertbildung über 5 bzw. 11 Werte (siehe dünne Kurve bzw. dicke Kurve) gearbeitet worden. Ferner sind zu den markierten Zeitpunkten Proben entnommen worden, die in einem Gaschromatographen analysiert worden sind (siehe Punktwerte in den Diagrammen).

Die dargestellten Brennstoffgassignale bzw. Kennzahlen stellen den Heizwert des Brennstoffs bezogen auf Normvolumen während des Referenzbetriebszustands im Verhältnis des Heizwerts des Brennstoffs bezogen auf Normvolumen zum Ermittlungszeitpunkt dar ($Hu_{v,0/}Hu_v$). Die Kennzahlen entsprechen demnach dem Kehrwert der linken Seite der oben genannten Gleichung (10).

Die Referenzwerte (Index 0) sind die Mittelwerte über den jeweiligen Versuchszeitraum. Die Analyseergebnisse der Probenentnahme bestätigen den Trend des Kennzahlverlaufs und zeigen dass die Änderung der Heizwerte auf wenige Promille genau erkannt wird.

**Patentansprüche**

1. Verfahren zur Ermittlung schwankender Brennstoffeigenschaften (Hu, ρ) während des Betriebs einer Kraftwerksanlage, bei dem anhand von aktuellen Betriebsparametern (P, m, V, p, T) der Kraftwerksanlage ein Wirkungsgrad (η) für die Kraftwerksanlage ermittelt wird und aufgrund einer zeitlichen Veränderung des derart ermittelten Wirkungsgrades (η) auf eine Änderung der Brennstoffeigenschaften (Hu, ρ) geschlossen wird,
   **dadurch gekennzeichnet, dass**
   die zeitliche Veränderung des Wirkungsgrades (η) bezogen auf einen Referenzbetriebszustand (0) ermittelt wird, zu dem als Referenzgrößen der Heizwert ($Hu_0$) und/oder die Normdichte ($\rho_0$) des Brennstoffs ermittelt werden, wobei die Ermittlung der Referenzgrößen ($Hu_0$; $\rho_0$) durch eine gleitende Mittelwertbildung während des Betriebs der Kraftwerksanlage erfolgt.

2. Verfahren nach Anspruch 1,
   **dadurch gekennzeichnet, dass**
   als aktuelle Betriebsparameter (P, m, V, p, T) mindestens ein Element aus der Gruppe Leistung (P) der Kraftwerksanlage, Massenstrom (m) des Brennstoffs, Volumenstrom (V) des Brennstoffs, Druck (p) des Brennstoffs und Temperatur (T) des Brennstoffs ermittelt wird.

3. Verfahren nach Anspruch 2,
**dadurch gekennzeichnet, dass**
der Wirkungsgrad (η) durch direkte Erfassung des Massenstroms (m) des Brennstoffs ermittelt wird.

4. Verfahren nach Anspruch 2,
**dadurch gekennzeichnet, dass**
der Wirkungsgrad durch Erfassung des Volumenstroms (V), des Drucks (p) und der Temperatur (T) des Brennstoffs, insbesondere unter Vernachlässigung des Realgasfaktors (z), ermittelt wird.

5. Verfahrens nach Anspruch 2,
**dadurch gekennzeichnet, dass**
der Wirkungsgrad durch Messung von Differenzdruck (Δp), Druck (p) und Temperatur (T) des Brennstoffs, insbesondere unter Vernachlässigung des Realgasfaktors (z), ermittelt wird.

6. Verfahren nach einem der Ansprüche 1 bis 5,
**dadurch gekennzeichnet, dass**
als Änderung der Brennstoffeigenschaft (Hu, ρ) auf eine Änderung des massenbezogenen Heizwerts ($Hu_m$) des Brennstoffs geschlossen wird.

7. Verfahren nach einem der Ansprüche 1 bis 6,
**dadurch gekennzeichnet, dass**
als Änderung der Brennstoffeigenschaft (Hu, ρ) auf eine Änderung des volumenbezogenen Heizwerts ($Hu_v$) des Brennstoffs geschlossen wird.

8. Verfahren nach einem der Ansprüche 1 bis 7,
**dadurch gekennzeichnet, dass**
als Änderung der Brennstoffeigenschaft (Hu, ρ) auf eine Änderung des Wobbeindex $\left(\sqrt{\frac{\rho_{N,0}}{\rho_N}\frac{Hu_V}{Hu_{V,0}}}\right)$ geschlossen wird.

9. Verfahren nach einem der Ansprüche 1 bis 8,
**dadurch gekennzeichnet, dass**
die Änderung der Brennstoffeigenschaften (Hu, ρ) mittels mathematischer Methoden quantifiziert wird.

## Claims

1. Method for determining fluctuating fuel properties (Hu, p) during the operation of a power station plant, in which, based on current operating parameters (P, m, V, p, T) of the power station plant, an efficiency (η) for the power station plant is determined and a change in the fuel properties (Hu, p) is deduced on the basis of a change over time of the efficiency (η) determined in this manner,
**characterised in that**
the change over time of the efficiency (η) is determined in relation to a reference operating state (0), for which the calorific value ($Hu_0$) and/or the normal density ($P_0$) of the fuel are determined as variables, with the reference variables ($Hu_0$; $P_0$) being determined by forming a moving average during the operation of the power station installation.

2. Method according to claim 1,
**characterised in that**
at least one element from the group power (P) of the power station plant, mass flow (m) of the fuel, volume flow (V) of the fuel, pressure (p) of the fuel and temperature (T) of the fuel is determined as the current operating parameter (P, m, V, p, T).

**3.** Method according to 2,
**characterised in that**
the efficiency (η) is determined by direct detection of the mass flow (m) of the fuel.

**4.** Method according to 2,
**characterised in that**
the efficiency is determined by recording the volume flow (V), the pressure (p) and the temperature (T) of the fuel, especially while ignoring the real gas factor (z).

**5.** Method according to 2,
**characterised in that**
the efficiency is determined by measuring differential pressure (Δp), pressure (p) und temperature (T) of the fuel, especially while ignoring the real gas factor (z).

**6.** Method according to one of the claims 1 to 5,
**characterised in that**
a change of the mass-related calorific value ($Hu_m$) of the fuel is deduced as a change in the fuel properties (Hu, p).

**7.** Method according to one of the claims 1 to 6,
**characterised in that**
a change of the volume-related calorific value ($Hu_v$) of the fuel is deduced as a change in the fuel properties (Hu, p).

**8.** Method according to one of the claims 1 to 7,
**characterised in that**

a change in the Wobbe index ( $\sqrt{\frac{P_{N,0}}{P_N}\frac{Hu_v}{Hu_{v,0}}}$ ) is deduced as a change in the fuel properties (Hu, p).

**9.** Method according to one of the claims 1 to 8,
**characterised in that**
the change in the fuel properties (Hu, p) is quantified by means of mathematical methods.

## Revendications

**1.** Procédé de détermination de propriétés ( Hu, ρ ) fluctuantes du combustible pendant le fonctionnement d'une centrale électrique, dans lequel on détermine au moyen de paramètres ( P, m, V, p, T ) instantanés de fonctionnement de la centrale électrique ( π ) et, sur la base d'une variation dans le temps du rendement ( π ) ainsi déterminé, on tire des conclusions sur une variation des propriétés ( Hu, ρ ) du combustible,
**caractérisé en ce que**
on détermine la variation dans le temps du rendement ( π ) rapportée à un état ( 0 ) de fonctionnement de référence pour lequel on détermine, comme grandeurs de référence, la capacité calorifique ( $Hu_0$ ) et/ou la densité ( $\rho_0$ ) normative du combustible, la détermination des grandeurs ( $Hu_0$, $\rho_0$ ) s'effectuant par la formation d'une moyenne mobile pendant le fonctionnement de la centrale électrique.

**2.** Procédé suivant la revendication 1,
**caractérisé en ce que**
on détermine, comme paramètres ( P, m, V, p, T ) de fonctionnement instantanés, au moins un élément du groupe puissance ( P ) de la centrale électrique, courant ( m ) massique du combustible, courant ( V ) en volume du combustible, pression ( p ) du combustible et température ( T ) du combustible.

**3.** Procédé suivant la revendication 2,
**caractérisé en ce que**
on détermine le rendement ( π ) par détection directe du courant ( π ) massique du combustible.

**4.** Procédé suivant la revendication 2,
**caractérisé en ce que**

l'on détermine le rendement en détectant le courant ( V ) en volume, la pression ( p ) et la température ( T ) du combustible, en négligeant notamment le facteur ( z ) de gaz réel.

5. Procédé suivant la revendication 2,
**caractérisé en ce que**
l'on détermine le rendement en mesurant la pression différentielle ( Δ, ), la pression ( p ) et la température ( T ) du combustible, en négligeant notamment le facteur ( z ) de gaz réel.

6. Procédé suivant l'une des revendications 1 à 5,
**caractérisé en ce que**
l'on tire des conclusions, en tant que variation de la propriété ( Hu, ρ ) du combustible, sur une variation de la valeur ( $Hu_0$ ) calorifique rapportée à la masse du combustible.

7. Procédé suivant l'une des revendications 1 à 6,
**caractérisé en ce que**
l'on tire des conclusions, en tant que variation de la propriété ( Hu, ρ ) du combustible, sur une variation de la valeur ( $Hu_v$ )
calorifique rapportée à la masse du combustible.

8. Procédé suivant l'une des revendications 1 à 7,
**caractérisé en ce que**
l'on tire des conclusions, en tant que variation de la propriété ( Hu, p ) du combustible, sur une variation de l'indice de $\left( \sqrt{\frac{\rho_{N,0}}{\rho_N} \frac{Hu_V}{Hu_{V,0}}} \right)$

9. Procédé suivant l'une des revendications 1 à 8,
**caractérisé en ce que**
l'on quantifie la variation des propriétés ( Hu, p ) du combustible au moyen de méthodes mathématiques.

FIG 1

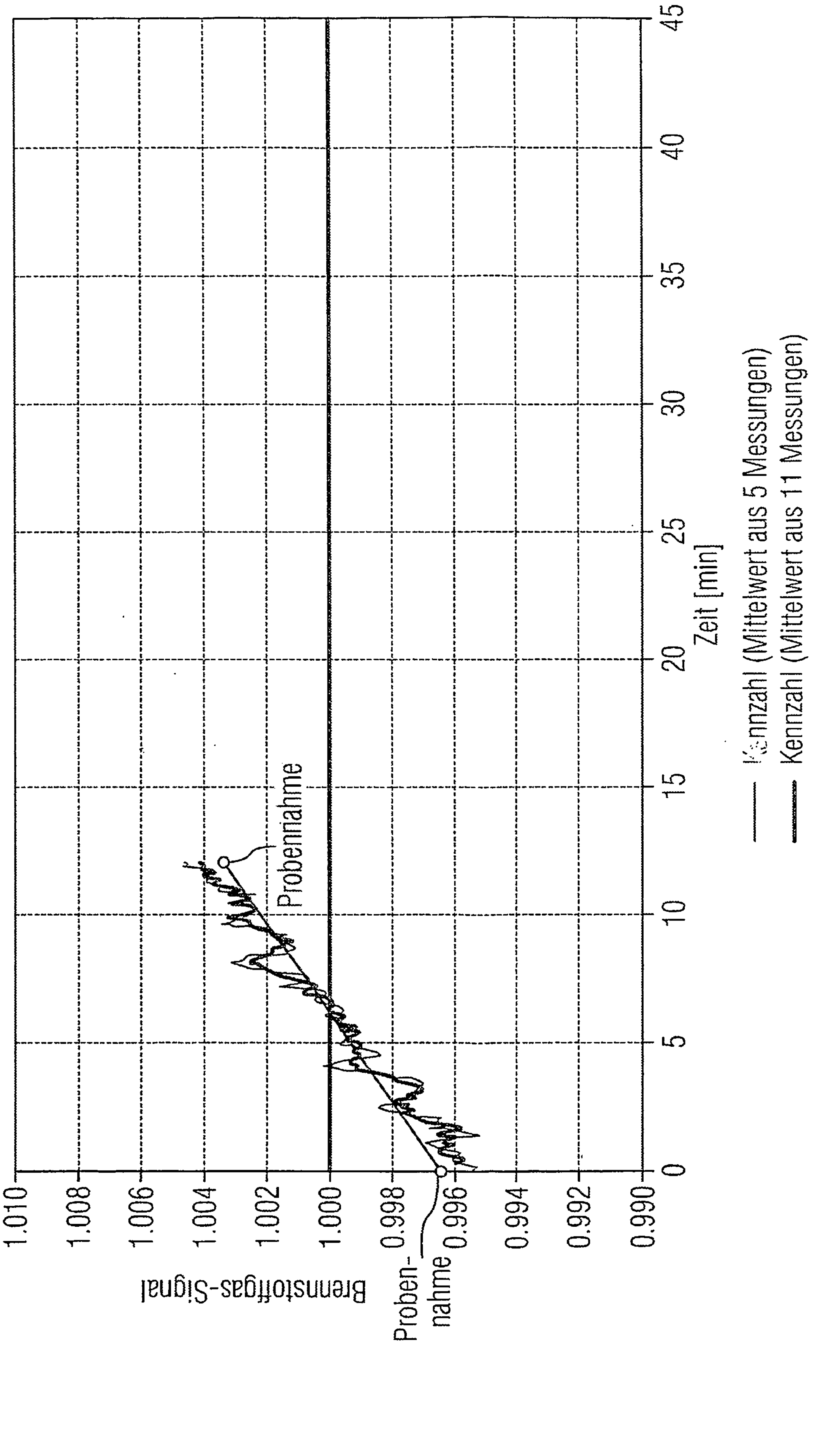
Brennstoffgas-Signal
1.010
1.008
1.006
1.004
1.002
1.000
0.998
0.996
0.994
0.992
0.990
0
5
10
15
20
25
30
35
40
45
Zeit [min]
Proben-
nahme
Probennahme
nnzahl (Mittelwert aus 5 Messungen)
Kennzahl (Mittelwert aus 11 Messungen)
HU,v,0/HU,v

FIG 2

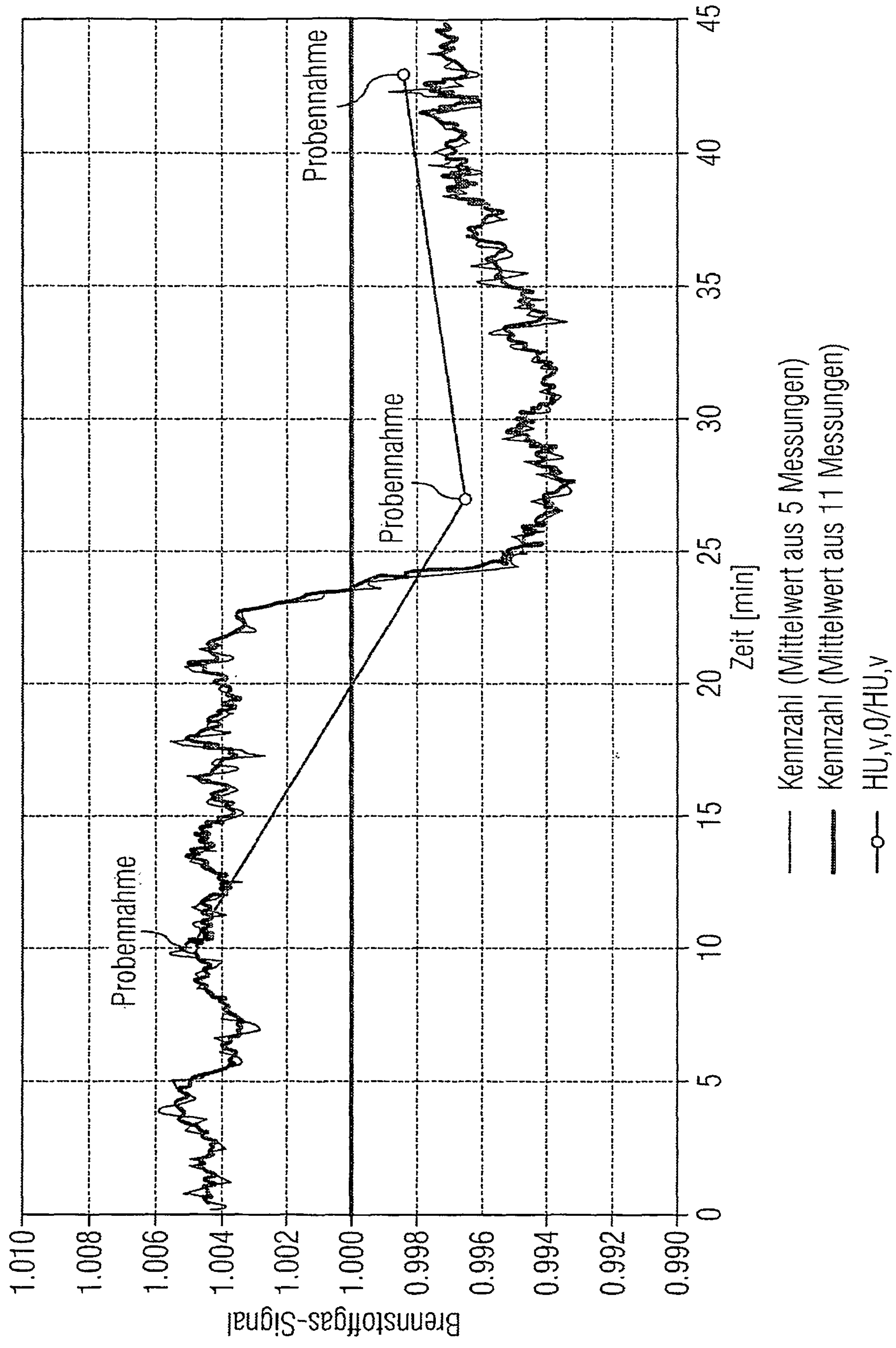
Brennstoffgas-Signal
1.010
1.008
1.006
1.004
1.002
1.000
0.998
0.996
0.994
0.992
0.990
0
5
10
15
20
25
30
35
40
45
Zeit [min]
Probennahme
Probennahme
Probennahme
Kennzahl (Mittelwert aus 5 Messungen)
Kennzahl (Mittelwert aus 11 Messungen)
HU,v,0/HU,v

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1118857 A2
- JP P57070321 A
- US 5486107 A
- US 4459306 A